# EUROPEAN PATENT SPECIFICATION

(11) **EP 0 277 788 B1**
(45) Date of publication and mention of the grant of the patent: **29.12.1993**
(21) Application number: 88300812.0
(22) Date of filing: 01.02.1988
(51) Int. Cl.: B60G 17/00, B60G 17/06, F16F 7/04, F16F 7/08

(54) **Motor vehicle suspension with adjustable unit and control system therefor**
Kraftfahrzeugaufhängung mit regelbarer Vorrichtung und Regelvorrichtung dafür
Suspension de véhicule automobile à unité réglable et son système de commande

(30) Priority: 02.02.1987 US 10250
(43) Date of publication of application: 10.08.1988
(73) Proprietor: FORD MOTOR COMPANY LIMITED, Brentwood, Essex CM13 3BW (GB); FORD FRANCE SOCIETE ANONYME, 92506 Rueil Malmaison Cedex (FR); FORD-WERKE AKTIENGESELLSCHAFT, 50725 Köln (DE)
(72) Inventor: Klinger, Gary, Canton Michigan 48187 (US); Reichenbach, Thomas G., Livonia Michigan 48154 (US); Budde, Karl C., Dearborn Michigan 48121 (US)
(74) Representative: Messulam, Alec Moses

(56) References cited:
- DE-A- 2 629 816
- DE-A- 3 048 532
- FR-A- 1 297 563
- FR-A- 2 562 844
- US-A- 4 265 467

## Description

This invention relates to a motor vehicle suspension with an adjustable suspension unit and to a control system therefor.

Adjustable suspension units, and particularly adjustable suspension units with adjustable damping capability have been the subject of numerous patents. For example, U.S. patent 3,603,612 discloses an adjustable shock absorber in which an electronic control valve is operable to change the damping capability of the unit as a function of vehicle speed.

Adjustable shock absorbers have been employed with a variety of control schemes. An example of one such control scheme is disclosed in U.S. patent 4,333,668 in which damping is controlled as a function, inter alia, of body roll. For the purposes of this document, the term "body roll" refers to a potentially objectionable tilting or leaning of an automobile body from its normal ride attitude during a turn or other manoeuvre.

U.S. patent 4,564,215 discloses a control system in which a bistable suspension unit is switchable from a soft state to a hard state.

U.S. patent 4,589,676 discloses a control system which senses road undulations and changes the damping characteristics of the suspension unit accordingly. This device, as well as the previously described devices, includes hydraulic means for damping road-induced vibrations. Although such means may be satisfactory under certain conditions, hydraulic suspension units are generally incapable of achieving fast response in the 10 to 15 Hz. frequency regime which characterises the vertical suspension motion of many modern motor vehicles.

U.S. patents 3,913,938; 3,992,039; 4,364,574; 4,453,725; and 4,591,185 each disclose a type of suspension system including vehicle height or level control capability. Each of these devices is either hydraulically or pneumatically actuated and each functions at a steady state to control the height of the vehicle's body with respect to the balance of the suspension system. None of these systems is capable of controlling a suspension unit in the manner herein described while the suspension unit is oscillating at the natural frequency of the suspension system, which includes the suspension unit, the wheel and tire assembly, and any other dampers or spring elements.

U.S. patent 3,606,365 discloses an active suspension system for a vehicle in which the vehicle body is supported by a piston and cylinder arrangement. Oscillations of the body are counteracted by manipulating the volume of fluid on either side of the piston. This system, too, is not capable of high frequency response because of the lag time associated with the various valves and other hydraulic devices included in the system. Such hydraulic devices are generally incapable of accurately controlling a suspension system during a half cycle stroke because of the non-linear relationship between the force the hydraulic damper generates and the input control signals. This non-linearity results from the characteristics of the hydraulic valves, from the compressibility of the hydraulic fluid, and other factors, and makes it difficult to control damping force independent of damper velocity.

Other problems with hydraulic dampers stem from the compressibility of the hydraulic fluid and from the fact that hydraulic dampers cannot easily generate high forces at low damper velocities. Such a capability is desirable for anti dive, anti-squat, and anti-roll vehicle control. Yet another deficiency of hydraulic dampers resides in the fact that such devices typically exhibit high frictional losses due to hydraulic seals.

Designers have attempted various configurations for sliding friction dampers or shock absorbers. In fact, sliding friction dampers were known at the dawn of the automotive age. For example, U.S. patent 875,759 discloses a sliding friction shock absorber which is adjustable by means of either a wedge or a four bar link mechanism. Other types of sliding friction shock absorbers are shown in U.S. patents 1,671,658; 3,052,458; 3,866,724; and 3,990,542. French patent 1,143,703 discloses yet another type of sliding friction shock absorber. None of these designs is suitable for integration in an automotive suspension system wherein it is desired to control the damping of the shock absorber depending upon which stroke of the two stroke cycle the damping device, as well as the balance of the suspension in which the damping device is included, happens to be operating in. Each of these aforementioned sliding friction shock absorbers suffers from a similar deficiency residing in the fact that there is no feedback of the force developed by the device. As a result, wear within the device cannot be accounted for except in a gross sense - i.e. by adjusting the unit when a loss of ride control is noted by the vehicle operator. Further, none of these devices can be controlled dynamically.

DE-A-3 048 532 discloses a suspension system for a motor vehicle having a body and road wheels supporting said body, with said road wheels being connected to said body by said suspension system, said suspension system comprising a suspension unit including a damper having an adjustable sliding friction element and adjustment means for adjusting the damping force developed by said damper, and a control system comprising means coupled to the adjustment means for adjusting the damping force generated by the damper.

EP-A-0 114 757 and GB-A-1 604 416 show suspension systems in which direct measurement is made of the damping force generated by the damper and though such measurement permits a closed loop feedback control to be achieved it is still difficult to control the damping force generated by sliding friction elements in view of the very small amount of movement required to achieve a change in the generated damping force.

The present invention therefore seeks to provide a suspension system using friction elements to achieve damping and having a control system which is capable of fine control of the damping force and of high frequency response.

According to the present invention, there is provided a suspension system for a motor vehicle having a body and road wheels supporting said body, with said road wheels being connected to said body by said suspension system, said suspension system comprising a suspension unit including a damper having an adjustable sliding friction element and adjustment means for adjusting the damping force developed by said damper, and a control system comprising means coupled to the adjustment means for adjusting the damping force generated by the damper, characterised in that the control system comprises means for directly measuring the magnitude of the damping force generated by said damper and in that the adjustment means comprises a motor driving a lead screw operatively connected to said sliding friction element such that rotation of said lead screw by said motor causes the frictional damping force created by said sliding friction element to be adjusted, whereby the force produced by the damper is proportional to the control current driving the motor.

The sliding friction element included in a suspension unit according to the present invention preferably comprises either a plurality of rotor plates interleaved between and clampingly engaged by a plurality of stator plates, or a plurality of semi-circular segments positioned for sliding engagement with the inner surface of a cylindrical tube.

The invention will now be further described by way of example with reference to the accompanying drawings in which:
Figure 1 is a schematic of an adjustable suspension unit and control system suitable for use together according to the present invention.
Figure 2 is a perspective drawing of a motor vehicle incorporating the present system.
Figure 3 is an elevation of an adjustable suspension unit suitable for use with the present invention.
Figure 4 is a partially cut-away view of the suspension unit shown in Figure 3.
Figure 5 is a partial cross section of the suspension unit shown in Figure 4, taken along the line 5-5 of Figure 4.
Figure 6 is a cross sectional view of a second adjustable damper suitable for use according to the present invention.
Figure 7 is a cross sectional view of the damper shown in Figure 6, taken along the line 7-7 of Figure 6.
Figure 8 is a logic flow block diagram relating to this invention.
Figure 9 is a second logic flow block diagram relating to this invention.

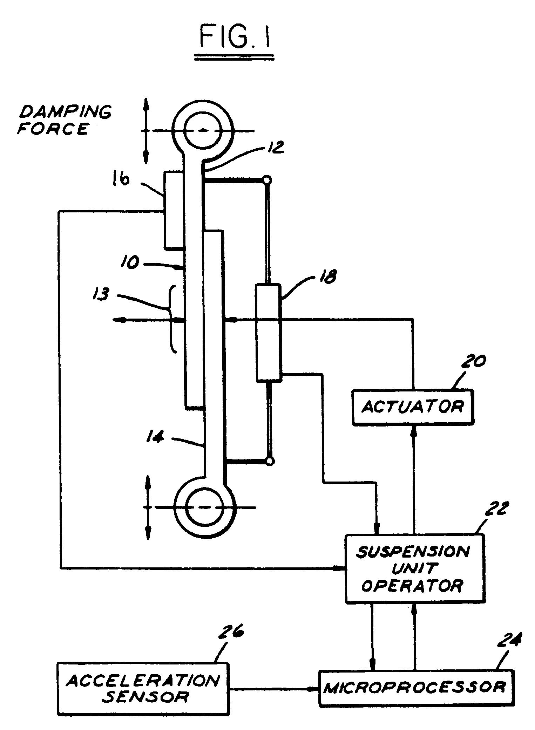

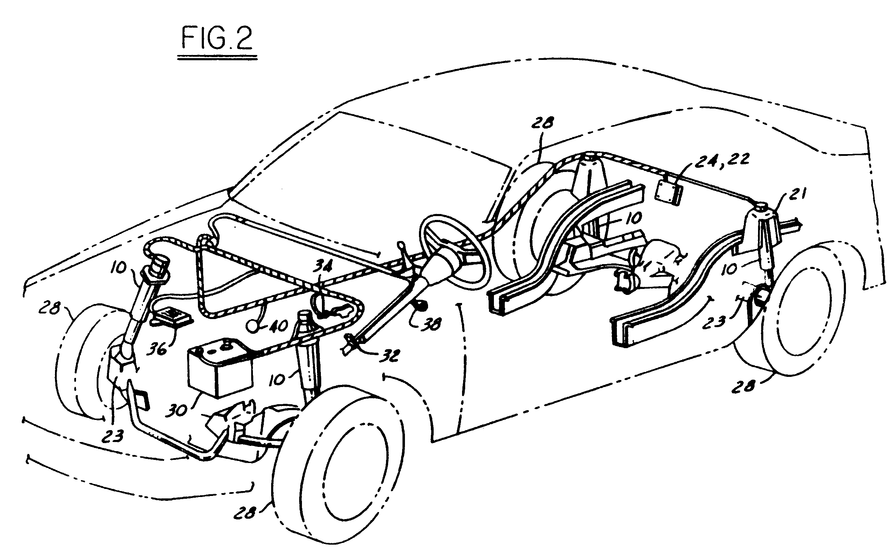

As shown in Figures 1 and 2, a control system is intended for use with an adjustable suspension unit having adjustable damping capability and used in an automotive vehicle or any other type of land vehicle. As shown particularly in Figure 1, adjustable suspension unit 10 comprises a portion 12 which is to be attached to a vehicle body and a portion 14 attached to a portion of the suspension which is more closely connected with the wheel and tire assembly.

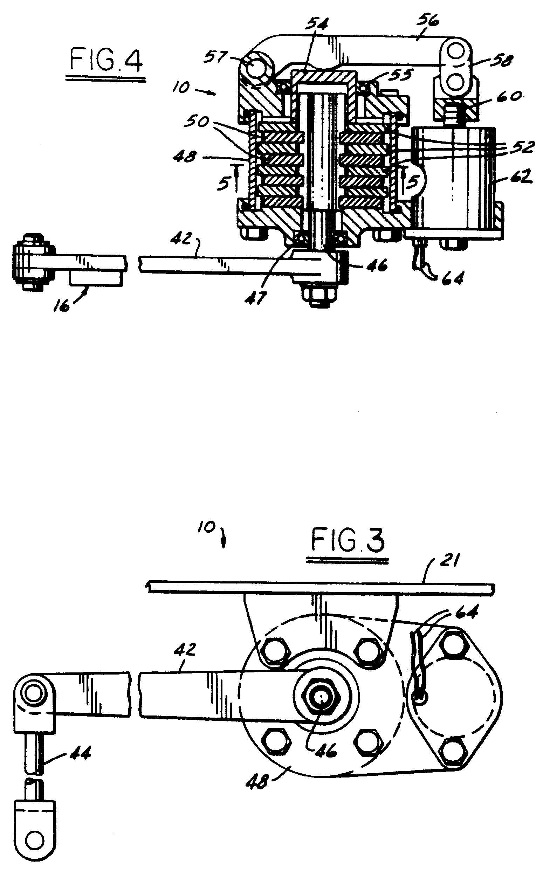

As shown in Figure 1, damping section 13 lies between portions 12 and 14 of adjustable suspension unit 10. Damping section 13 comprises a sliding friction damping device such as those shown in Figures 3, 4, 5, 6 and 7. Force sensor 16 is attached to portion 12 of the adjustable damping unit 10. The force sensor may comprise a piezoelectric device or load cell, or other types of force sensors known to those skilled in the art and suggested by this disclosure. It will be appreciated in view of this disclosure that other locations may be employed for mounting the force sensor. In any event, the purpose of the force sensor is to measure the amount of damping force developed by adjustable suspension unit 10 and to feed this information to the microprocessor and to the suspension unit operator.

The movement of portions 12 and 14 of adjustable suspension unit 10 with respect to each other is detected by motion sensor 18. This sensor may be constructed according to the several methods known to those skilled in the art and suggested by this disclosure. For example, the sensor may comprise a Hall Effect sensor such as those currently employed in some automotive vehicles, or the sensor may preferably may comprise a linear variable differential transformer (LVDT), or other known types of sensors. In any event, motion sensor 18 furnishes the control system with information regarding the motion of the two portions of adjustable suspension unit 10 with respect to each other. This information tells the control system at any given instance whether the adjustable suspension unit is moving in a jounce direction, i.e., in a direction wherein its length is decreasing, or in a rebound direction, i.e., in a direction wherein its length is increasing. Sensor 18 also discloses to the control system the precise position of suspension unit 10 in terms of its fully-extended, full-contracted states. This information is important because the control system is intended to adjust the damping force generated by adjustable suspension unit 10 according to the particular stroke of the cycle in which the adjustable suspension unit is operating.

For the purposes of this document, adjustable suspension unit 10 is considered to operate in a cycle. The cycle has two strokes. As noted before, the first stroke, herein referred to as the rebound stroke, describes the motion of the adjustable suspension unit when its length is increasing. The second stroke, herein referred to as the jounce stroke, describes the motion of the adjustable suspension unit when its length is decreasing. It is understood that the adjustable suspension unit is attached at one end generally to one or more wheel and tire assemblies shown at 28 in Figure 2 as well as being attached to the body of the vehicle at the other end of the suspension unit.

As further shown in Figure 1, the system includes actuator 20, suspension unit operator 22, microprocessor or computer 24, and acceleration sensor 26.

Actuator 20 functions to control the force developed by adjustable suspension unit 10. This control results from the adjustment, by the actuator, of a sliding friction element contained within adjustable suspension unit 10. Two types of sliding friction elements are shown in Figures 4-7 herein. Although the actuator is shown schematically in Figure 1 as being separate from suspension unit 10, the actuator would, in actual practice, probably comprise a part of the suspension unit.

Suspension unit operator 22 receives inputs from force sensor 16, motion sensor 18 and microprocessor 24.

Microprocessor 24 outputs to suspension unit operator 22 a desired force signal. Suspension operator 22, knowing the measured force being generated by the adjustable suspension unit at any time by virtue of the signals from force sensor 16, then outputs the signal to actuator 20 to direct the actuator to adjust the damping force produced by adjustable suspension unit 10. Notwithstanding that the suspension unit operator and the microprocessor are shown schematically as discrete components in Figure 1, these parts of the system could be combined into a single unit.

Microprocessor 24 may receive various inputs from acceleration sensor 26. For example, acceleration sensor 26 may be arranged to provide an input to microprocessor 24 relating to turning of the vehicle, or brake operation of the vehicle, or operation of the vehicle throttle, or vertical vibration of the vehicle, or other inputs. It will also be appreciated therefore, that acceleration sensor 26 could comprise a variety of sensors such as an accelerometer, a brake sensor such as a pressure sensor or electronic switch associated with the brake system of the vehicle, or other types of sensors such as a throttle position sensor included in a throttle mechanism operatively connected with the vehicle power plant. Yet another type of steering sensor useful for predicting lateral acceleration in a vehicle is disclosed in U.S. patent 4,621,833 which is hereby incorporated by reference herein.

Microprocessor 24 and its peripheral equipment could be structured according to several different architectures. In a preferred embodiment, however, microprocessor 24 is configured so that a control program is sequentially read for each unit command from a read-only memory (ROM) which stores preset control programs. Unit commands are executed by a central processing unit (CPU). The microprocessor integrally includes an input-output control circuit (I/0) for exchanging data with external devices and a random access memory (RAM) for temporarily holding data while the data are being processed.

As shown in Figure 2, a vehicle including body 21 and four road wheel and tire assemblies 28 has adjustable suspension units 10 mounted generally between the wheel and tire assemblies and the vehicle body. A MacPherson strut suspension is illustrated at the front of the vehicle, whereas a Hotchkiss drive is shown at the rear. Alternatively, however, an adjustable suspension unit and control system according to the present invention could be employed with a vehicle in a variety of suspension configurations, it being understood that those shown in Figure 2 are merely examples of the class of suspensions useful for practising the invention.

Figure 2 shows microprocessor 24 mounted in the rear of the vehicle. The microprocessor enclosure also includes suspension unit operator 22. As an alternative, microprocessor 24 and suspension unit operator 22 could be integrated with an engine control computer, or any other type of on-board computer system within the vehicle. Moreover, multiple suspension unit operators may be employed so as to independently control each suspension unit with a unique operator.

As shown in Figure 2, road wheel and tire assemblies 28 are connected by means of suspensions 23 to adjustable suspension units 10. Although four adjustable suspension units are shown on the vehicle in Figure 2, it will be appreciated in view of this disclosure that adjustable units could be used at fewer than four locations in the vehicle. For example, if it is determined that a particular vehicle is particularly prone to fore and aft pitching, it may be desirable to equip the vehicle with adjustable suspension units at only the front or rear of the vehicle.

The system shown in Figure 2 is powered by the vehicle's battery, 30. A variety of sensors are employed to provide the system with information it needs in order to operate adjustable suspension units 10. Accordingly, steering sensor 32 is shown. This sensor functions as described in U.S. patent 4,621,833 which was previously incorporated by reference into this document. Brake sensor 34 is also shown, as is speed sensor 38. The brake, speed, and steering sensors may all be used for the purpose of detecting acceleration of the vehicle. For example, speed sensor 38 detects vehicle speed and the data therefrom may be manipulated by microprocessor 24 to calculate vehicle velocity and acceleration. Brake sensor 34 detects operation of the vehicle's brake system and therefore will detect linear acceleration (or deceleration) of the vehicle due to application of the brakes. Throttle position sensor 40 may also be used to detect acceleration because application of the throttle will normally cause the vehicle's speed to increase. Steering sensor 32 may be used to predict lateral acceleration of the vehicle, because movement of the steering wheel will almost always precede the lateral acceleration occasioned by a subsequent turn.

A single accelerometer, 36, is shown as being mounted in the front of the vehicle in the approximate vicinity of the engine compartment. It should be understood that multiple accelerometers could be employed with one or more accelerometers at the front of the vehicle and one or more accelerometers at the rear of the vehicle. If. desired, an accelerometer could be positioned adjacent to each adjustable suspension unit 10. Alternatively, sensors could be deployed at the right and left sides (i.e., on the passenger and driver sides of the vehicle) to allow detection of body roll. It will be appreciated in view of this disclosure that the previously described accelerometers could be employed to detect acceleration in several mutually perpendicular planes such as laterally, longitudinally, or vertically.

As shown in Figures 3-5, one type of adjustable suspension unit is of the rotary type. Although rotary friction dampers were used in automobiles many years ago, such dampers were unreliable because the force characteristics of the damper could not be regulated accurately. As a result, their damping characteristics were unreliable. The present invention solves this problem.

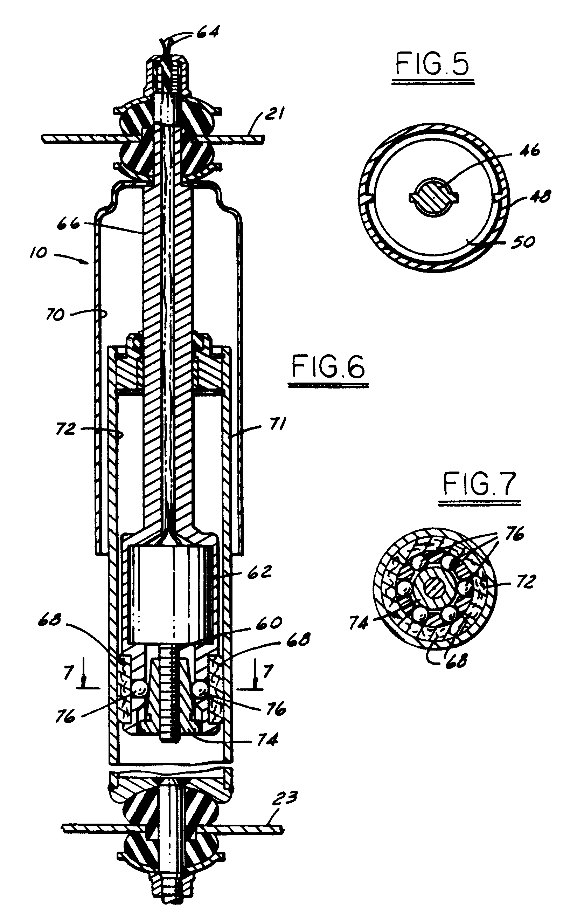

As shown in Figure 3, adjustable suspension unit 10 is mounted to body 21 of the vehicle. Housing 48 of the adjustable suspension unit is attached to the body by means of a bracket or other conventional attaching techniques. Adjustable suspension unit 10 is connected to the balance of the suspension according to any of several well known constructions by means of link 44 which is attached to pitman arm 42. The pitman arm is rigidly attached to rotatable shaft 46 which is pivoted within housing 48. For this purpose, bearing 47 is provided at one end of rotatable shaft 46. The opposite end of rotatable shaft 46 is pivoted within plunger 54 (See Figure 4). Rotatable shaft 46 has a plurality of rotors 50 keyed thereto. Figure 5 shows rotors 50 and this keying feature in greater detail. Rotors 50 rotate with rotatable shaft 46 as rotatable shaft 46 is driven by pitman arm 42, link 44 and the balance of the suspension attached to these components.

A plurality of stators 52 is interleaved with rotors 50. Stator plates 52 are non-rotatably mounted within outer housing 48. Stator plates 52 are urged to clampingly engage rotor plates 50 by plunger 54 so that rotation of rotatable shaft 46 and rotor plates 50 is thereby resisted. As a result, adjustable suspension unit 10 resists jounce and rebound motion of the suspension transmitted by link 44 to pitman arm 42. The measured amount of resistance to suspension motion (damping force) is fed into suspension unit operator 22 by means of force sensor 16.

The amount of damping force developed by suspension unit 10 shown in Figure 4 is controlled by plunger 54 in conjunction with crosslink 56, toggle link 58, lead screw 60, and torque motor 62. Plunger 54 presses axially upon the interleaved stator and rotor plates so as to develop a normal or clamping force between the stator and rotor plates. Accordingly, the amount of friction acting between the rotor and stator plates and the resultant damping force developed by the suspension unit is controlled. Plunger 54 is loaded into the stator and rotor plate stack by means of crosslink 56, which is pivoted to outer housing 48 by means of crosslink pivot 57. Crosslink 56 is connected to a driving mechanism comprising lead screw 60 and torque motor 62 by means of toggle link 58. Toggle link 58 has a pivot at either end allowing lead screw 60 and torque motor 62 to move crosslink 56 in and out so as to either clamp tighter or more loosely plunger 54 and thereby, the stator and rotor stack.

Lead screw 60 and torque motor 62 advantageously control the adjustable suspension unit because only very small displacements of plunger 54 are needed to change the frictional force developed between the stator and rotor plates. This allows very high amplification of the actuator force with minimum actuator displacement. Thus, a small torque motor and lead screw assembly may be used while at the same time maintaining high frequency response. Accordingly, the relationship between the force developed by the adjustable suspension unit and the electrical control current supplied to the motor is linear. The damping force developed by the adjustable suspension is therefore linearly related to the sliding frictional force through the coefficient of friction. Because the motor torque produced by the torque motor for small displacements is linearly proportional to the control current, the force produced by the damper is proportional to the control current driving the motor. As a result, the frequency response of the suspension unit is limited primarily by the speed with which the control current can be changed in the motor. Because this control current can be changed very rapidly a suspension unit according to the present invention can have very fast response characteristics. In addition, the damping force developed by a suspension unit according to the present invention is independent of velocity of the suspension unit's motion in the jounce and rebound directions. The damper can generate its maximum force at zero suspension velocity or at maximum suspension velocity or at any intermediate velocity. Because the damping is adjustable, moreover, the damper can be manipulated to provide zero damping, if required.

A second embodiment of a damper is shown in Figures 6 and 7. In this embodiment, piston rod 66 is attached to vehicle body 21. The lower end of suspension unit 10, including cylindrical tube 71, is attached to suspension 23 of the vehicle. Thus, as the suspension and attached wheel and tire assembly 28 moves through the jounce and rebound strokes, adjustable suspension unit 10 will be caused to contract and expand in length. This contraction and expansion in length is accompanied by the sliding of a plurality of semi-circular segments 68 upon inner surface 72 of cylindrical tube 71. This sliding motion of semi-circular segments 68 dissipates energy in the manner of the rotational sliding of the rotors and stators of the previous embodiment.

Semi-circular segments 68 are maintained in contact with the inner surface 72 of cylindrical tube 71 by means of wedge 74, shown in Figures 6 and 7. Wedge 74 is preloaded into semi-circular segments 68 with the assistance of a plurality of bearings 76 which are interposed between the semi-circular segments and wedge 74. Wedge 74 is driven by lead screw 60 which is operatively attached to torque motor 62. Lead screw 60 is rotated by torque motor 62 and the threads of the lead screw, which mate with threads formed upon an inner surface of the wedge, cause the wedge to be positioned more tightly or less tightly against bearings 76 as the lead screw is rotated. As a result, semi-circular segments 68 are caused to be positioned so as to develop a greater or lesser level of frictional force between the semi-circular segments and the inner surface 72 of cylindrical tube 70. In this manner, the damping force produced by the adjustable suspension unit is adjustable. Stepper motor 62 is operated by means of electrical leads 64 which pass out of the adjustable suspension unit through one end of piston rod 66 and connect with suspension operator 22. As before, the motor current is controlled so as to adjust the damping force produced by the suspension unit.

Other types of sliding friction devices than those disclosed herein could be employed in a suspension system according to the present invention.

As noted previously, a control system according to the description herein may be operated either to eliminate completely or to reduce objectionable roll motion and other undesirable motions of a vehicle body. Such motions are encountered, for example, when the vehicle body "rolls over" during cornering. In this context, the term "roll over" does not mean literally that the vehicle's wheels leave the ground and vehicle rolls upon its side or roof, but rather "roll over" means, in the traditional automotive sense, that the body is caused, for a moment, to leave its normal riding attitude and to objectionably lift up on one side or the other. This objectionable body motion may also occur during braking operation, which is frequently accompanied by lifting of the rear end of the vehicle and lowering the front of the vehicle. Acceleration, on the other hand, may produce an objectionable lowering of the rear end of the vehicle and raising of the front end of the vehicle. The final type of objectionable motion which the present invention is intended to either reduce or eliminate, is vertical oscillation of the body as a result of road surface inputs.

It has been found that the wheel and tire assemblies of a vehicle traversing a flat, level, and nominally smooth roadway will oscillate vertically (i.e., in the jounce and rebound directions) at a frequency of approximately 13 Hz. This oscillation of the wheel and tire assemblies will occur no matter how smooth the road surface appears to an unaided eye. The vehicle body, on the other hand, has a natural frequency of vibration of approximately 1.4 Hz, falling in a range of observed natural frequencies running from approximately 0.9 Hz to 1.8 Hz. Because the natural frequency of the body is approximately one order of magnitude less than the frequency of oscillation of the wheel and tire assemblies, some of the resilient energy available in the vehicle's suspension springs as well as the energy available in the vertically oscillating wheel and tire assemblies will be utilised to control the attitude of the body without causing the body to vibrate excessively. Accordingly, "pump-up" and "pump-down" routines are disclosed for controlling the attitude of the vehicle body. As previously noted, the suspension of a vehicle described herein, including an adjustable suspension unit having variable damping capability, operates in a cycle comprising jounce and rebound strokes. If it is desired to raise that portion of the vehicle's body attached to a given suspension unit, the suspension unit may be controlled so that the suspension unit is set to achieve a much greater degree of damping when the wheel and tire assembly and its associated suspension unit are moving in the jounce direction, whereas the suspension unit will be adjusted to achieve a much lesser degree of damping when the wheel and tire assembly and associated suspension components are moving in the rebound direction. This is called "pump-up". Conversely, "pump-down" occurs when it is desired to move either the entire body, or only one side or end thereof downward, or to apply a downwardly directed force to the body. In the case of pump-down operation, the adjustable suspension unit will be set to provide a lesser degree of damping when the suspension unit and wheel and tire assembly and the remainder of the suspension are moving in the jounce direction, but the suspension unit will be adjusted to provide maximum or at least a greater degree of damping when the wheel and tire assembly and suspension unit and the remainder of the suspension are moving in the rebound direction.

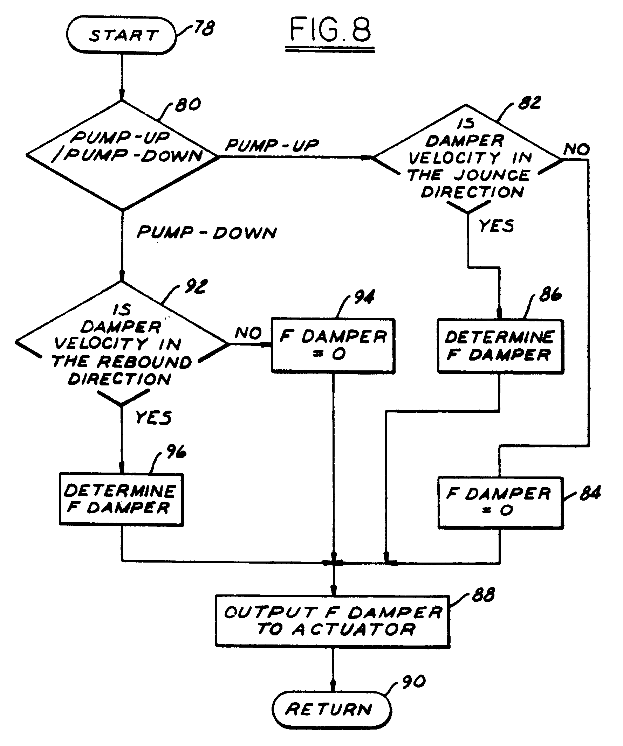

Referring now to Figure 8, a simplified logic flow diagram for the operation of a control system suitable for use with the present invention is shown. After block 78, the start of the pump-up/pump-down routine, the computer transfers to block 80 wherein it asks whether pump-up or pump-down is required by microprocessor 24.

In the event that pump-up is required the computer transfers to block 82 wherein the velocity of suspension unit 10 in either the jounce or rebound directions is determined. In the event that the suspension unit 10 is moving in the rebound direction, the computer transfers to block 84 and sets the force output command to suspension unit operator 22 at a zero or near zero level. In the event, however, that suspension unit 10 is moving in the jounce direction, the computer transfers to block 86 and determines an appropriate force to be developed by the damper. The desired force output information is transferred at block 88 to actuator assembly 20 via suspension unit operator 22. The computer then returns at block 90 to start block 78. In similar fashion, in the event that a pump-down is being requested by microprocessor 24, the computer transfers at block 80 to block 92 wherein a question is asked about the velocity of suspension unit 10. In the event that suspension unit 10 is moving in the jounce direction, the force of the damper at block 94 is set at zero or near zero, and an appropriate force command is then output to actuator 20 via suspension operator 22 at block 88. In the event, however, that suspension unit 10 is moving in the rebound direction, the computer will, at block 96, set the damper force at some value greater than zero and this will be output to actuator 20 via suspension unit operator 22 at block 88.

In the event that a vehicle equipped with the system described herein is turned in either the right or left directions, steering sensor 32 and associated software will detect incipient lateral acceleration. If, for example, the vehicle is making a left turn, which would normally cause the body to roll over to the right, the adjustable suspension units on the right side of the vehicle will be given a pump-up command, while the units on the left side of the vehicle will be given a pump-down command. Operation of the adjustable suspension units in this manner will counteract the roll of the body. In this example, the suspension units are controlled in response to detected incipient lateral acceleration. In similar fashion, should the driver of the vehicle apply the brakes, the suspension unit in the front of the vehicle can be given a pump-up command while those in the rear are given a pump-down command. Once again, this operation of the adjustable suspension units will tend to maintain the body at a level attitude. In this example, the suspension units are controlled in response to either incipient linear acceleration, or actual linear acceleration. Accordingly, the method and system described in Figure 8 comprises means for detecting vertical motion of the body with respect to a horizontal global reference plane and adjusting the force developed by the suspension units according to the particular stroke of the cycle which each suspension unit is operating, so that the suspension units will assert a net force upon the body in the direction tending to resist vertical motion of the body. In this manner, the force imposed upon the vehicle's body by the suspension unit is modulated according to the particular stroke the suspension unit is operating in, so that the suspension unit will exert a net force upon the vehicle's body in the desired direction, either upwardly or downwardly. The suspension unit thus exerts a net force upon the vehicle's body in only one direction, because although the individual forces exerted by the suspension unit in the jounce and rebound directions will tend to cancel each other, these forces will not be equal, and as a consequence, the sum of the forces will have an absolute value greater than zero.

It has been found that setting the magnitude of the force developed by the adjustable suspension unit proportional to the vertical velocity of the body with respect to a horizontal global reference plane produces an acceptable vehicle ride characteristic. This has been implemented in a "sky hook" method.

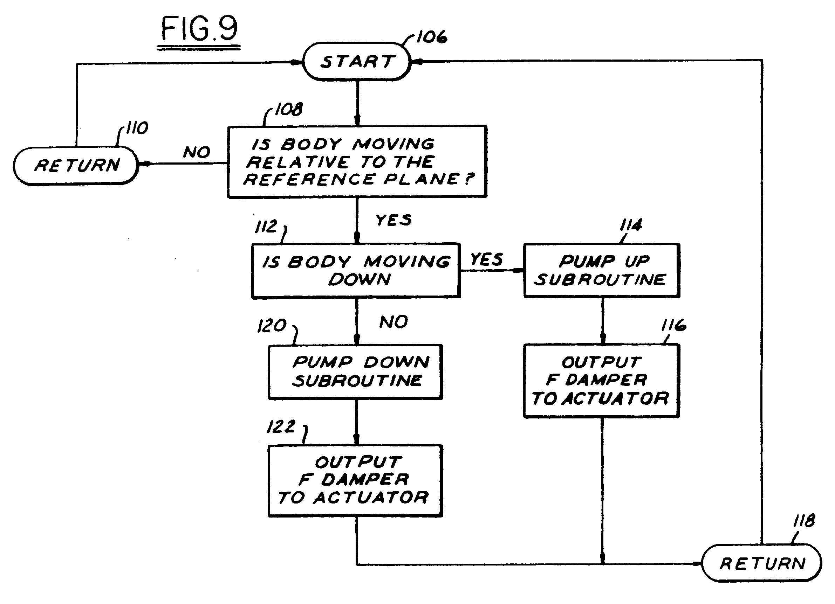

Figure 9 discloses the previously mentioned sky hook method for operation of a suspension unit according to the present invention. Beginning at block 106, the start block, the computer transfers to block 108 wherein the computer ascertains with the help of the previously described sensors, whether the vehicle's body is moving relative to a horizontal global reference plane. For this purpose, the sensors may include an accelerometer, or a high, medium, or low frequency ranging device such as a laser device, a radar, a microwave device, or other known devices. In the event that the body is not moving vertically above a predetermined threshold velocity the computer returns at block 110 to the start block. In the event, however, that the body is moving above a threshold velocity in the vertical direction, the computer asks at block 112 whether the body is moving down. In the event that the body is moving down, the pump-up subroutine is selected at block 114. This subroutine may be precisely that shown for pump-up in Figure 8, or a modified form of this subroutine. In any event, however, output of the adjustable suspension unit desired damping force signal to actuator 20 at block 116 is as before. Having done this, the computer transfers at block 118 to the start block. In the event that the body is moving up, the computer initiates the pump-down subroutine at block 120 and outputs a new force signal to the actuator at block 122. In this manner, the vehicle body can be maintained at a level attitude, and the vehicle will be allowed to drive down a road without having unnecessarily harsh vertical body motion due either to inputs from the wheel and tire assemblies or from road surface imperfections. In any event, the magnitude of the desired damping force is calculated by the computer in the following manner. First, the computer integrates signals from the accelerometer or accelerometers to calculate the vehicle's vertical velocity. This calculated velocity is multiplied by a constant value and the result is then transformed into a desired damping force signal.

A control system and suspension unit could be operated according to other strategies, it being understood that the pump-up and pump-down and sky hook algorithms or methods described herein are merely examples of a class of such strategies. Moreover, the suspension unit could be operated according to a very simple strategy which merely emulates a conventional shock absorber. operation according to such a simple strategy would nevertheless yield a significant advantage inasmuch as the suspension will not suffer from the performance deficiencies suffered by other types of friction and hydraulic shock absorbers. Accordingly, the suspension unit will not undergo degraded damping capacity due to wear or overheating or foaming of hydraulic fluid.

The described system and method for operating the suspension unit is particularly advantageous because the system is able to determine the particular stroke of the cycle which the suspension unit is operating, and the system is further able to adjust the force developed by the suspension unit according to the stroke the unit is operating in so that the suspension unit will exert a net force upon the vehicle body in a desired direction. Another advantage of the present system derives from the fact that low amounts of power are required to operate the system. Unlike some types of hydraulic or pneumatic systems, the semi-active nature of the present system allows it to consume very little power while operating.

As used herein, the term "body" refers to a conventional automotive body, or to a conventional automotive body and chassis combination.

Various modifications and variations will no doubt occur to those skilled in the various arts to which this invention pertains. For example, the particular sensors used in conjunction with the disclosed system may be varied from those disclosed within.

## Claims

1. A suspension system for a motor vehicle having a body and road wheels supporting said body, with said road wheels being connected to said body by said suspension system, said suspension system comprising a suspension unit (10) including a damper (13) having an adjustable sliding friction element (50;68) and adjustment means (20) for adjusting the damping force developed by said damper (13), and a control system (22,24) comprising means coupled to the adjustment means (20) for adjusting the damping force generated by the damper (13), characterised in that the control system comprises means (16) for directly measuring the magnitude of the damping force generated by said damper (13) and in that the adjustment means (20) comprises a motor (62) driving a lead screw (60) operatively connected to said sliding friction element (50;68) such that rotation of said lead screw (60) by said motor (62) causes the frictional damping force created by said sliding friction element (50;68) to be adjusted, whereby the force produced by the damper (13) is proportional to the control current driving the motor (62).

2. A suspension system according to Claim 1, wherein said adjustable sliding friction element (50) comprises a plurality of rotor plates (50) interleaved between, and clampingly engaged by, a plurality of stator plates (52).

3. A suspension system according to Claim 1, wherein said adjustable sliding friction element comprises a plurality of semi-circular segments (68) positioned for sliding engagement with the inner surface (72) of a cylindrical tube (71).

## Patentansprüche

1. Aufhängungssystem für ein Kraftfahrzeug mit Karosserie und Laufräder, welche genannte Karosserie tragen, wobei genannte Laufräder durch genanntes Aufhängungssystem mit genannter Karosserie verbunden sind, wobei genanntes Aufhängungssystem eine Aufhängungseinheit (10) mit Dämpfer (13) beinhaltet, welcher ein einstellbares Gleitreibungselement aufweist (50; 68), und Einstellvorrichtung (20) zur Einstellung der von Dämpfer (13) entwickelten Dämpfkraft, sowie eine Steuerung (22, 24), mit einer an die Einstellvorrichtung gekoppelte Vorrichtung zur Einstellung der vom Dämpfer (13) entwickelten Dämpfkraft, dadurch gekennzeichnet, daß die Steuerung Vorrichtung (16) zur direkten Messung der Größe der von genanntem Dämpfer (13) entwickelten Dämpfkraft aufweist, und dadurch, daß die Einstellvorrichtung (20) einen Motor (62) beinhaltet, der die Verstellschraubenspindel (60) antreibt, die auf genanntes Gleitreibungselement (50;68) wirkt, so daß Drehung genannter Verstellschraubenspindel (60) durch genannten Motor (62) die Einstellung der von genanntem Gleitreibungselement (50;68) erzeugten Reibungsdämpfkraft bewirkt, wobei die vom Dämpfer (13) entwickelte Kraft proportional zum Steuerstrom ist, der den Motor (62) antreibt.

2. Aufhängungssystem nach Anspruch 1, in welchem genanntes einstellbares Gleitreibungselement (50) mehrere Rotorplatten (50) beinhaltet, die in mehrere Statorplatten (52) greifen und durch Klemmung miteinander verbunden sind.

3. Aufhängungsvorrichtung nach Anspruch 1, in welchem genanntes einstellbares Gleitreibungselement (50) mehrere halbkreisförmige Segmente (68) beinhaltet, die so angeordnet sind, daß sie eng an der inneren Oberfläche (72) einer zylindrischen Röhre (71) gleiten.

## Revendications

1. Système de suspension dur un véhicule à moteur muni d'une carrosserie et de roues supportant ladite carrosserie, lesdites roues étant reliées à ladite carrosserie par ledit système de suspension, ledit système de suspension comprenant une unité de suspension (10) incluant un amortisseur (13) muni d'un élément de friction à glissement réglable (50, 68) et de moyens de réglage (20) pour régler la force d'amortissement générée par ledit amortisseur (13), et un système de commande (22, 24) comprenant des moyens couplés aux moyens de réglage (20) pour régler la force d'amortissement générée par l'amortisseur (13), caractérisé en ce que le système de commande comprend des moyens (16) dur mesurer directement la magnitude de la force d'amortissement générée par ledit amortisseur (13) et en ce que les moyens de réglage (20) comprennent un moteur (62) actionnant une tige filetée (60) reliée activement audit élément de friction à glissement (50,68) de manière à ce que la rotation de ladite tige filetée (60) par ledit moteur (62) entraîne le réglage de la force de frottement de l'amortisseur générée par ledit élément de friction à glissement (50, 68), la force produite par l'amortisseur (13) étant proportionnelle au courant de commande entraînant le moteur (62).

2. Système de suspension selon la revendication 1, dans lequel ledit élément de friction à glissement réglable (50) comprend plusieurs ailettes de rotor (50) intercalées entre des ailettes de stator (52) et engrenées par serrage par celles-ci.

3. Système de suspension selon la revendication 1, dans lequel ledit élément de friction à glissement réglable comprend plusieurs segments semi-circulaires (68) placés de façon à pouvoir s'engrener en coulissant avec la surface intérieure (72) d'un tube cylindrique (71).
